# EUROPÄISCHE PATENTSCHRIFT

(11) **EP 2 319 676 B1**
(45) Veröffentlichungstag und Bekanntmachung des Hinweises auf die Patenterteilung: **05.10.2016**
(21) Anmeldenummer: 09013862.9
(22) Anmeldetag: 04.11.2009
(51) Int. Cl.: B29C 45/27

(54) **Vorrichtung zum Herstellung von Elastomerprodukten**
Device for manufacturing elastomer products
Dispositif de fabrication de produits élastomères

(43) Veröffentlichungstag der Anmeldung: 11.05.2011
(73) Patentinhaber: Carl Freudenberg KG, 69469 Weinheim (DE)
(72) Erfinder: Stickel, Thorsten, 68549 Ilvesheim (DE); Döhner, Markus, 69493 Hirschberg (DE); Ferber, Markus, 76646 Bruchsal (DE)

(56) Entgegenhaltungen:
- EP-A1- 0 013 119
- EP-A2- 0 243 875
- DE-A1- 2 133 824
- DE-A1- 3 032 814
- DE-A1- 3 643 833
- DE-A1- 4 414 005
- GB-A- 2 322 589
- JP-A- 61 040 129
- JP-A- 2000 326 361
- JP-A- 2008 055 614
- JP-U- 63 006 821
- US-A- 3 754 846
- US-A- 3 936 257
- US-A- 3 993 787
- US-A1- 2004 247 738
- DATABASE WPI Week 199721 Thomson Scientific, London, GB; AN 1997-230530 XP002591343 & JP 9 070853 A (SATO TEKKOSHO KK) 18. März 1997 (1997-03-18)

## Beschreibung

### Technisches Gebiet

Die Erfindung betrifft eine Vorrichtung zum Herstellen von Elastomerprodukten, umfassend ein Formwerkzeug mit zumindest einer Kavität für das herzustellende Elastomerprodukt und einer Düseneinheit und ein Verfahren zur Herstellung von Elastomerprodukten.

### Stand der Technik

Es gibt Elastomerprodukte in verschiedensten Ausprägungen. Eine bekannte Gattung ringförmiger Elastomerprodukte sind Dichtungsringe, mit Dichtlippen aus elastomerem Werkstoff in verschiedensten Formgebungen. Den Elastomerprodukten ist gemeinsam, dass die Formgebung in der Kavität eines Formwerkzeugs erfolgt, der das Rohmaterial des Elastomerproduktes beispielsweise mittels Spritzgießen zugeführt wird. Des Weiteren erfolgt eine Vulkanisation des Elastomerproduktes, also eine Wärmebehandlung noch innerhalb der Kavität, Elastomere Werkstoffe, die einmal durch eine Wärmbehandlung vulkanisiert werden, können anschließend nicht mehr durch Urformen geformt werden. Daher ist es erforderlich, die Düseneinheit einer Spritzgießmaschine zu kühlen, um zu verhindern, dass das Elastomermaterial bereits in der Düseneinheit vulkanisiert. Dazu sind aus dem Stand der Technik verschiedene Ausführungen von Kaltkanälen bekannt, bei denen die Kanäle durch die das Rohmaterial strömt gekühlt werden. Ringförmige vulkanisierte Elastomerprodukte werden momentan im Spritzguss derart hergestellt, dass eine zentrale temperierte Düse das Rohmaterial der Kavität zuführt. Dabei entsteht, der Mitte des ringförmigen Elastomerproduktes zugeordnet, eine Scheibe mit einem koaxialen Anguss, die durch ein geeignetes Trennverfahren von dem Elastomerprodukt entfernt werden muss. Dabei entsteht eine Abfallmenge, die die Menge des Elastomerproduktes übersteigen kann. Der scheibenförmige Anguss ist vulkanisiert und kann nicht wiederverwertet oder weiterbearbeitet werden.

Eine gattungsgemäße Vorrichtung ist in der deutschen Offenlegungsschrift DE 36 438 33 A1 gezeigt.

### Darstellung der Erfindung

Der Erfindung liegt die Aufgabe zugrunde, eine Vorrichtung zur Herstellung ringförmiger vulkanisierter Elastomerprodukte bereitzustellen, bei der die Abfallmenge ausvulkanisierten Rohmaterials reduziert ist.

Diese Aufgabe wird mit den Merkmalen von Anspruch 1 gelöst. Auf vorteilhafte Ausgestaltungen nehmen die Unteransprüche Bezug.

Zur Lösung der Aufgabe weist die Düseneinheit der Vorrichtung eine Ringeinheit auf. Die Ringeinheit umfasst einen konzentrischen Zentralbereich durch den das Rohmaterial axial von oben oder unten der Düseneinheit zugeführt wird. Ausgehend von dem Zentralbereich erstrecken sich mehrere Kanäle radial nach außen. Mittels strömungstechnisch günstigem Übergang wird das Material von den Kanälen über eine Ringeinheit dem Formwerkzeug zugeführt. Dabei ist die Düseneinheit so ausgebildet, dass das Rohmaterial in dem Zentralbereich, in den Kanälen und in der Ringeinheit stets formbar bleibt und nicht vulkanisiert. Der Vulkanisationsprozess findet ausschließlich in dem Formwerkzeug durch eine geeignete Wärmebehandlung statt. Das Elastomerprodukt, welches in der erfindungsgemäßen Vorrichtung hergestellt wird, weist dabei einen ringförmigen Anguss auf, der anschließend in einer nachgeschalteten Bearbeitung entfernt wird. Der Vorteil des ringförmigen Angusses im Vergleich zu dem bekannten scheibenförmigen Anguss aus dem Stand der Technik liegt insbesondere in der Materialersparnis. Durch die erfindungsgemäße Vorrichtung können je Elastomerprodukt weit mehr als 50% Rohmaterial eingespart werden.

Die Düseneinheit ist erfindungsgemäß beweglich zu dem Formwerkzeug angeordnet. Hierbei ist vorteilhaft, dass die Düseneinheit nur temporär, nämlich während des Gießvorgangs an dem Formwerkzeug anliegt und dann über die Ringeinheit der Kavität das Material zuführt. Die Düseneinheit ist dabei derart temperiert, dass das in der Düseneinheit vorhandene Rohmaterial stets formbar bleibt unabhängig von der Temperierung des Formwerkzeuges. Dabei sind die Düseneinheit und die Ringeinheit vorzugsweise axial zu dem Formwerkzeug beweglich. Nach Abschluss des Gießvorganges werden die Düseneinheit und die Ringeinheit axial nach oben von dem Formwerkzeug weggeführt. Damit sind die Düseneinheit und die Ringeinheit von dem Formwerkzeug beabstandet und das Rohmaterial wird in der Kavität des Formwerkzeugs wärmebehandelt, so dass es vulkanisiert und das Elastomerprodukt und einen Teil des Elastomerproduktes bildet.

Die Düseneinheit ist mit einer Kühleinrichtung versehen. Die Kühleinrichtung ist dabei vorzugsweise ein Material mit hoher Wärmeleitfähigkeit, so dass die Kühleinrichtung die von der Düseneinheit abzuführende Wärme schnell ableitet. Des Weiteren ist die Kühleinrichtung vorzugsweise dem Formwerkzeug zugewandt, da der Düseneinheit in diesem Bereich der Wärme des Formwerkzeugs ausgesetzt ist. Diese Wärme kann durch die Kühleinrichtung abgeführt werden.

Die Kühleinrichtung weist wärmeableitende Einrichtungen auf. Die wärmeableitenden Einrichtungen führen die durch die Kühleinrichtung aufgenommene Wärme von der Ringeinheit weg. Dabei erstrecken sich die Einrichtungen in die Düseneinheit hinein. Vorteilhafterweise erstrecken sich die Einrichtungen dabei in Abschnitte der Düseneinheit die zum einen von der Ringeinheit so beabstandet sind, dass die Abschnitte wiederum nicht zu einer Erwärmung der Ringeinheit führen und zum anderen die Abschnitte eine derartige Masse aufweisen, dass die Wärmekapazität groß ist.

Die Kühleinrichtung kann eine wärmeableitende Platte aufweisen. Die wärmeableitende Platte bedeckt die Unterseite der Düseneinheit flächig und verbessert so die Wärmeabfuhr.

Die Einrichtungen können als Heatpipes ausgebildet sein. Eine Heatpipe, auch als Wärmerohr bezeichnet ist ein Wärmeüberträger, der unter Nutzung von Verdampfungswärme eines Stoffes eine hohe Wärmestromdichte erlaubt, so können auf kleiner Querschnittsfläche große Mengen Wärme transportiert werden. Dadurch kann die durch die Kühleinrichtung aufgenommene Wärme sehr effektiv in andere Bereiche der Düseneinheit übertragen werden.

Die Düseneinheit kann eine separate ringförmige Abdeckung aufweisen, wobei die Düseneinheit einen Teil der Wandung der Ringeinheit bildet und die Abdeckung einen weiteren Teil der Wandung der Ringeinheit bildet. Dabei können die Düseneinheit und die Abdeckung zueinander axial beweglich ausgebildet sein. Um das Elastomerprodukt aus dem Formwerkzeug entformen zu können, ist das Formwerkzeug mehrteilig, wenigstens zweiteilig ausgebildet und im Bereich des Angusses befindet sich ein Spalt. Durch diesen Spalt wird das Rohmaterial aus der Düseneinheit der Kavität des Formwerkzeugs zugeführt. Bedingt durch die Mehrteiligkeit des Formwerkzeugs kann die Spaltbreite des Spaltes in Grenzen variieren. Dies würde jedoch zu Undichtigkeiten und zu fehlerhaftem Materialfluss führen. Durch die Beweglichkeit von Düseneinheit und Abdeckung zueinander kann die Abweichung der Spaltbreite kompensiert werden, so dass die Ringeinheit stets dicht an dem Formwerkzeug anliegt.

Bei dem Verfahren zur Herstellung ringförmiger vulkanisierter Elastomerprodukte, wird das Rohmaterial über eine Düseneinheit einer Kavität eines Formwerkzeuges zugeführt, wobei die Doseneinheit nach Abschluss der Zufuhr des Rohmaterials in die Kavität thermisch von dem Formwerkzeug getrennt wird. Dadurch ist das in der Düseneinheft enthaltene Rohmaterial unbeeinflusst von der nachfolgenden Wärmebehandlung in dem Formwerkzeug und bleibt für nachfolgende Arbeitsschritte formbar. Dabei kann die Düseneinheit vor Beginn der Zufuhr des Rohmaterials von dem Formwerkzeug beabstandet werden, zur Zufuhr des Rohmaterials an das Formwerkzeug angelegt werden und nach Abschluss der Zufuhr des Rohmaterials wieder von dem Formwerkzeug beabstandet werden. Somit berührt die Düseneinheit das Formwerkzeug nur während der Zufuhr des Rohrmaterials und ist ansonsten von thermischen Einflüssen des Formwerkzeugs isoliert.

Kurzbeschreibung der Zeichnung Eine Ausführung der erfindungsgemäßen Vorrichtung wird nachfolgend anhand der Figur näher erläutert. Diese zeigt schematisch:
Fig. 1 eine nicht zur Erfindung gehörende Vorrichtung im Schnitt;
Fig. 2 eine erfindungsgemäße Vorrichtung zum Herstellen von Dichtungsringen.

### Ausführung der Erfindung

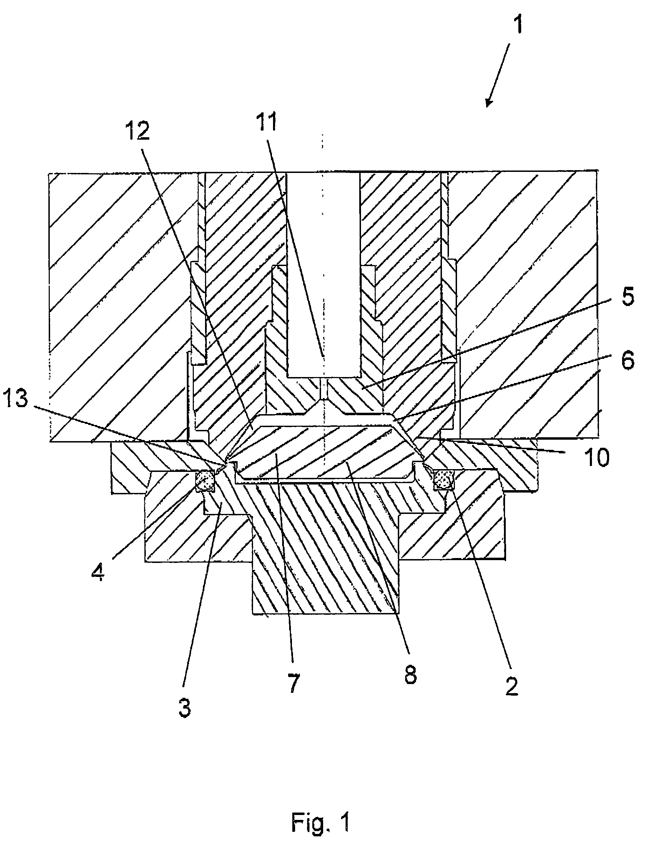

Figur 1 zeigt eine Vorrichtung 1 zum Herstellen von Elastomerprodukten 2. Die Vorrichtung umfasst im Wesentlichen ein Formwerkzeug 3 mit zumindest einer Kavität 4 für das herzustellende Elastomerprodukt 2 und einer oberhalb des Formwerkzeugs 3 angeordneten Düseneinheit 5. Die Düseneinheit 5 weist zum Transport des Rohmaterials in die Kavität 4 des Formwerkzeugs 3 eine Ringeinheit 6 auf. Diese besteht aus einem konzentrischen Zentralbereich 11 durch den das Rohmaterial axial von oben oder unten der Düseneinheit 5 zugeführt wird. Ausgehend von dem Zentralbereich 11 erstrecken sich mehrere Kanäle 12 radial nach außen, wobei die Kanäle 12 direkt an dem Formwerkzeig 3 enden. Über die Kanäle 12 wird das Rohmaterial ausgehend von dem Zentralbereich 11 dem Formwerkzeug 3 zugeführt und strömt durch diese in die Kavität 4. Dabei ist die Düseneinheit 5 beweglich zu dem Formwerkzeug 3 angeordnet, wobei die Düseneinheit 5 hydraulisch axial zu dem Formwerkzeug 3 beweglich ist. Die Düseneinheit 5 ist mit einer Kühleinrichtung 7 versehen. Die Düseneinheit 5 weist eine separate ringförmige Abdeckung 10 auf, wobei die Düseneinheit 5 einen Teil der Wandung der Ringeinheit 6 bildet und die Abdeckung 10 einen weiteren Teil der Wandung der Ringeinheit 6 bildet. Dabei sind die Düseneinheit 5 und die Abdeckung 10 zueinander axial beweglich ausgebildet. Das Formwerkzeug 3 ist ebenfalls zweiteilig ausgebildet, um das Elastomerprodukt 2 aus der Kavität 4 entformen zu können. Beide Teile des Formwerkzeuges 3 begrenzen dabei einen Spalt 13 durch den das Rohmaterial der Kavität 4 zugeführt wird. Durch die axiale Beweglichkeit von Düseneinheit 5 und Abdeckung 10 können Abweichungen der Spaltdicke des Spaltes 13 kompensiert werden.

In dem Verfahren zur Herstellung eines ringförmigen vulkanisierten Elastomerproduktes 2, wird das Rohmaterial des herzustellenden Elastomerproduktes 2 über die Düseneinheit 5 der Kavität 4 des Formwerkzeuges 3 zugeführt und die Düseneinheit 5 nach Abschluss der Zufuhr des Rohmaterials in die Kavität 4 thermisch von dem Formwerkzeug 3 getrennt. Dazu wird die Düseneinheit 5 vor Beginn der Zufuhr des Rohmaterials von dem Formwerkzeug 3 beabstandet, zur Zufuhr des Rohmaterials an das Formwerkzeug 3 angelegt und nach Abschluss der Zufuhr des Rohmaterials wieder von dem Formwerkzeug 3 beabstandet.

Die erfindungsgemäße Vorrichtung 1 und das entsprechende Verfahren eignen sich besonders vorteilhaft zum Herstellen von Dichtungsringen. Je nach Anwendung der Dichtung kann es erforderlich sein, hochpreisige Werkstoffe auszuwählen. Ein derartiger hochpreisiger und häufig verwendeter Werkstoff ist FKM (Fluorkautschuk). Durch die erfindungsgemäße Vorrichtung und das erfindungsgemäße Verfahren ergeben sich dabei hohe Material- und Kostenersparnisse. Des Weiteren reduziert sich die Abfallmenge des zu entsorgenden Angusses.

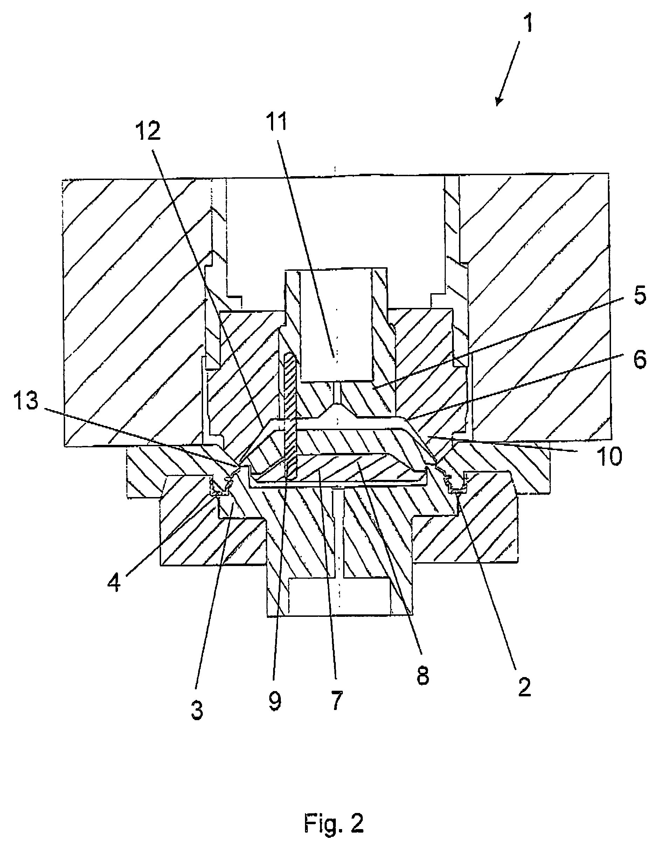

Figur 2 zeigt eine erfindungsgemäße Vorrichtung 1 zum Herstellen von Elastomerprodukten 2. Dabei ist die Vorrichtung 1 so ausgebildet, dass ringförmige vulkanisierte Elastomerprodukte 2, hier Dichtungsringe hergestellt werden. Die Düseneinheit 5 ist mit einer Kühleinrichtung 7 versehen. Dazu weist die Kühleinrichtung 7 eine wärmeableitende Platte 8 auf, die an der Unterseite der Düseneinheit 5 angeordnet und dem Formwerkzeug 3 zugewandt ist. Somit ist die wärmeableitende Platte 8 zwischen Formwerkzeug 3 und Düseneinheit 5 angeordnet. Zur Abfuhr der in der Kühleinrichtung 7 gespeicherten Wärme weist die Kühleinrichtung 7 mehrere wärmeableitende Einrichtungen 9 auf, die in dieser Ausgestaltung als Heatpipe ausgebildet sind. Die Einrichtungen 9 erstrecken sich in die Düseneinheit 5 hinein und führen die in der Kühleinrichtung 7 gespeicherten Wärme in Bereiche der Düseneinheit 5 ab, die die Ringeinheit 6 nicht beeinflussen.

## Patentansprüche

1. Vorrichtung (1) zum Herstellen ringförmiger vulkanisierter Elastomerprodukte (2), umfassend ein Formwerkzeug (3) mit zumindest einer Kavität (4) für das herzustellende Elastomerprodukt (2) und einer Düseneinheit (5), welche eine Ringeinheit (6) aufweist, wobei die Düseneinheit (5) mit einer Kühleinrichtung (7) versehen ist, **dadurch gekennzeichnet, dass** die Düseneinheit (5) beweglich zu dem Formwerkzeug (3) angeordnet ist und dass die Kühleinrichtung (7) wärmeableitende Einrichtungen (9) aufweist, wobei sich die Einrichtungen (9) in die Düseneinheit (5) hinein erstrecken.

2. Vorrichtung nach Anspruch 1, **dadurch gekennzeichnet, dass** die Düseneinheit (5) axial zu dem Formwerkzeug (3) beweglich ist.

3. Vorrichtung nach Anspruch 1, **dadurch gekennzeichnet, dass** die Kühleinrichtung (7) eine wärmeableitende Platte (8) aufweist.

4. Vorrichtung nach Anspruch 1, **dadurch gekennzeichnet, dass** die Einrichtungen (9) als Heatpipes ausgebildet sind.

5. Vorrichtung nach einem der Ansprüche 1 bis 4, **dadurch gekennzeichnet, dass** die Düseneinheit (5) eine separate ringförmige Abdeckung (10) aufweist, wobei die Düseneinheit (5) einen Teil der Wandung der Ringeinheit (6) bildet, und die Abdeckung (10) einen weiteren Teil der Wandung der Ringeinheit (6) bildet.

6. Vorrichtung nach Anspruch 5, **dadurch gekennzeichnet, dass** die Düseneinheit (5) und die Abdeckung (10) zueinander axial beweglich ausgebildet sind.

7. Vorrichtung nach einem der Ansprüche 1 bis 6, **dadurch gekennzeichnet, dass** das Formwerkzeug mehrteilig, insbesondere wenigstens zweiteilig ausgebildet ist.

## Claims

1. Apparatus (1) for manufacturing annular vulcanized elastomer products (2), comprising a mould (3) with at least one cavity (4) for the elastomer product (2) to be produced, and with a nozzle unit (5) which has an annular unit (6), wherein the nozzle unit (5) is provided with a cooling device (7), **characterized in that** the nozzle unit (5) is arranged movably with respect to the mould (3), and **in that** the cooling device (7) has heat-dissipating devices (9), wherein the devices (9) extend into the nozzle unit (5).

2. Apparatus according to Claim 1, **characterized in that** the nozzle unit (5) is movable axially with respect to the mould (3).

3. Apparatus according to Claim 1, **characterized in that** the cooling device (7) has a heat-dissipating plate (8).

4. Apparatus according to Claim 1, **characterized in that** the devices (9) are designed as heat pipes.

5. Apparatus according to one of Claims 1 to 4, **characterized in that** the nozzle unit (5) has a separate annular covering (10), wherein the nozzle unit (5) forms part of the wall of the annular unit (5), and the covering (10) forms a further part of the wall of the annular unit (6).

6. Apparatus according to Claim 5, **characterized in that** the nozzle unit (5) and the covering (10) are designed to be movable axially with respect to each other.

7. Apparatus according to one of Claims 1 to 6, **characterized in that** the mould is of multi-part design, in particular of at least two-part design.

## Revendications

1. Dispositif (1) pour fabriquer des produits élastomères vulcanisés de forme annulaire (2), comprenant un outil de formage (3) avec au mains une cavité (4) pour les produits élastomères (2) à fabriquer et une unité de buse (5) qui présente une unité de bague (6), l'unité de buse (5) étant pourvue d'un, dispositif de refroidissement (7), **caractérisé en ce que** l'unité de buse (5) est disposée de marnière mobile par rapport à l' outil de formage (3), et **en ce que** le dispositif de refroidissement (7) présente des dispositifs de dissipation de la chaleur (9), les dispositifs (9) s'étendant à l'intérieur de l'unité de buse (5).

2. Dispositif selon la revendication 1, **caractérisé en ce que** l'unité de buse (5) est déplaçable axialement par rapport à l'outil de formage z) .

3. Dispositif selon la revendication 1, **caractérisé en ce que** le dispositif de refroidissement (7) présenta une plaque de dissipation de la chaleur (8).

4. Dispositif selon la revendication 1, **caractérisé en ce que** les dispositifs (9) sont réalisés sous forme de caloducs.

5. Dispositif selon, l'une quelconque des revendications 1 à 4, **caractérisé en ce que** l'unité de buse (5) présente un recouvrement annulaire séparé (10), l'unité de buse (5) formant une partie de la paroi de l'unité annulaire (6) et le recouvrement (10) formant une autre partie de la paroi de l'unité annulaire (6).

6. Dispositif selon la revendication 5, **caractérisé en ce que** l'unité de buse (5) et le recouvrement (10) sont réalisés de manière déplaçable axialement l'un par rapport à l'autre.

7. Dispositif selon l'une quelconque des revendications 1 à 6, **caractérisé en ce que** l'outil de formage est réalisé en plusieurs parties, notamment au moins en deux parties.
